# EUROPÄISCHE PATENTSCHRIFT

(11) **EP 4 009 478 B1**
(45) Veröffentlichungstag und Bekanntmachung des Hinweises auf die Patenterteilung: **01.01.2025**
(21) Anmeldenummer: 21210346.9
(22) Anmeldetag: 25.11.2021
(51) Int. Cl.: H02J 7/00, H02J 7/14

(54) **KONFIGURIERBARES AKKUPACK, AKKUBETRIEBENES GERÄT, EXTERNES LADEGERÄT UND VERFAHREN ZUR KONFIGURATION EINES AKKUPACKS**
CONFIGURABLE BATTERY PACK, BATTERY-OPERATED DEVICE, EXTERNAL CHARGING DEVICE AND BATTERY PACK CONFIGURATION METHOD
BLOC D'ACCUMULATEUR POUVANT ÊTRE CONFIGURÉ, APPAREIL ALIMENTÉ PAR ACCUMULATEUR, CHARGEUR EXTERNE ET PROCÉDÉ DE CONFIGURATION D'UN BLOC D'ACCUMULATEUR

(30) Priorität: 03.12.2020 US 202017111129; 26.01.2021 DE 102021101682
(43) Veröffentlichungstag der Anmeldung: 08.06.2022
(73) Patentinhaber: Metabowerke GmbH, 72622 Nürtingen (DE)
(72) Erfinder: Stickel, Wolfgang, 72660 Beuren (DE)
(74) Vertreter: Lorenz, Matthias

(56) Entgegenhaltungen:
- EP-A1- 1 375 240
- WO-A1-2014/119184
- WO-A1-2014/120912
- US-A1- 2011 133 571
- US-A1- 2018 175 648

## Beschreibung

Die Erfindung betrifft ein akkubetriebenes Gerät zur Verwendung mit einem konfigurierbaren Akkupack, aufweisend eine Verbrauchersteuereinheit, eine Geräteschnittstelle und wenigstens einen elektrischen Verbraucher, gemäß dem Oberbegriff des Anspruchs 1.

Die Erfindung betrifft außerdem ein externes Ladegerät zum Laden eines konfigurierbaren Akkupacks, aufweisend eine Ladesteuereinheit und eine Geräteschnittstelle, gemäß dem Oberbegriff des Anspruchs 3.

Die Erfindung betrifft weiter ein System, umfassend ein Gerät und ein konfigurierbares Akkupack.

Die Erfindung betrifft schließlich auch ein Verfahren zur Konfiguration eines konfigurierbaren Akkupacks, wonach wenigstens ein Akkuladeparameter des Akkupacks an einer Datenschnittstelle des Akkupacks zur Verfügung gestellt wird, gemäß dem Oberbegriff des Anspruchs 9.

Akkumulatoren bzw. Akkupacks sind hinlänglich bekannt und werden im Stand der Technik als Stromquellen für eine Vielzahl von akkubetriebenen Geräten eingesetzt.

Im Zuge der stetigen Weiterentwicklung der Akkumulatoren ist die nutzbare Gesamtkapazität bzw. Energiedichte eines Akkupacks heutzutage mitunter derart hoch, dass bei Transport, Lagerung und Handhabung der Akkupacks teilweise besondere Sicherheitsmaßnahmen ergriffen werden müssen. Gleichzeitig ist es aus Gründen der Wirtschaftlichkeit meist notwendig, insbesondere Transport und Lagerung von solchen "Hochleistungsakkupacks" (z. B. Akkupacks mit einer Gesamtkapazität von ≥ 100 Wattstunden) oder von elektrischen Geräten, in denen derartige Akkupacks enthalten sind, möglichst unkompliziert zu gestalten.

Zur Lösung dieses Problems ist es bekannt, Akkuzellen innerhalb von Akkupacks oder auch mehrere Akkupacks erst dann elektrisch zusammenzuschalten, wenn die Akkupacks in Betrieb genommen werden sollen. Somit kann ein gefahrloser Transport bzw. eine gefahrlose Lagerung der Akkupacks oder elektrischen Einrichtungen mit den Akkupacks möglich sein, wobei gleichzeitig im Betrieb eine hohe nutzbare Gesamtkapazität als Summe der verschalteten Einzelkapazitäten zur Verfügung gestellt werden kann.

Ein derartiges Akkupack ist beispielsweise aus der DE 20 2015 106 271 U1 bekannt. Das Akkupack mit schaltbarer Gesamtkapazität zur Versorgung eines mobilen elektrischen Geräts mit elektrischer Energie weist zumindest zwei getrennte Zellenpacks mit elektrischen Anschlüssen auf, wobei die elektrischen Anschlüsse der Zellenpacks erst durch Einsetzen des Akkupacks in das Gerät und/oder durch elektrische Verbindung des Akkupacks mit dem Gerät zur Erzeugung der Gesamtkapazität elektrisch zusammenschaltbar sind. In der DE 20 2015 106 271 U1 ist weiter vorgesehen, dass zumindest ein Schaltelement zum internen Verschalten der elektrischen Anschlüsse der Zellenpacks angeordnet ist und dass das Schaltelement durch Einsetzen des Akkupacks in das Gerät und/oder durch elektrische Verbindung mit dem Gerät schaltbar ist.

Obwohl der Transport und die Lagerung eines derartigen Akkupacks grundsätzlich sicherer ist, da die Zellenpacks zunächst getrennt voneinander vorliegen und die nutzbare Gesamtkapazität des Akkupacks bei Transport und Lagerung verhältnismäßig gering ist, besteht ein gewisses Risiko, da die gespeicherte Energiemenge der zunächst noch getrennten Zellenpacks in der Summe dennoch hoch ist und bei einem schweren Transportschaden somit gegebenenfalls noch Gefahr von dem oder den Akkupacks ausgehen kann.

Es wäre grundsätzlich vorzuziehen, die in der Summe gespeicherte Energiemenge der Akkupacks während Transport und Lagerung zu begrenzen.

Mittlerweile sind Ladegeräte für Akkupacks bekannt geworden, bei denen ein gewünschter Ladezustand als Kriterium zum Beenden des Ladevorgangs vorgegeben werden kann. Ein derartiges Ladegerät ist beispielsweise aus der WO 2010/060400 A2 bekannt. Das Laden eines Akkupacks auf beispielsweise nur 80 % der Gesamtkapazität ist auch in Anbetracht der Lebensdauer der Akkupacks vorteilhaft, da es bekannt ist, dass sich die Lebensdauer von Akkupacks erhöht, wenn diese nicht immer vollständig aufgeladen werden.

Obwohl sich somit beim Ladevorgang durch das Ladegerät die Energiemenge, die in das Akkupacks eingespeist wird, begrenzen lässt, kann dennoch nicht garantiert werden, dass ein Benutzer oder ein Hersteller die Akkupacks auch tatsächlich nur bis zu einer als sicher geltenden Ladegrenze auflädt. Demnach sind auch die gesetzlichen Vorschriften betreffend den Gefahrguttransport nur abhängig von der nutzbaren Gesamtkapazität des Akkupacks und nicht vom tatsächlichen Ladezustand.

Ein weiteres Problem bei der Verwendung von Akkupacks kann sich ergeben, wenn die Akkupacks in verschiedenen Geräten mit unterschiedlichen elektrischen Verbraucheranforderungen eingesetzt werden sollen. Ein Problem kann insbesondere dann bestehen, wenn das Gerät eine Rekuperationseinrichtung aufweist, um bei einem Verlangsamen eines Elektromotors elektrische Energie in das Akkupack zurückzuspeisen. Insofern das Akkupack nicht auf die spezifische Anwendung abgestimmt ist, kann durch das Bremsen des Elektromotors bedingt durch die Rückspeiseströme eine Spannungserhöhung verursacht werden, die über der zulässigen Zellenspannung der einzelnen Ackuzellen liegt. Hierdurch können die Akkuzellen geschädigt werden, was zu einem Ausfall oder zumindest zu einer Reduzierung der Lebensdauer des Akkupacks führen kann. Diese Problematik kann insbesondere auch die flexible Austauschbarkeit von Akkupacks zwischen verschiedenen Geräten limitieren.

Zum weiteren technischen Hintergrund sei noch auf die folgenden Druckschriften verwiesen.

Die US 2018/175648 A1 betrifft ein konfigurierbares Akkupack, umfassend ein integriertes Batterie-Management-System sowie eine Datenschnittstelle und eine Benutzerschnittstelle, wobei das Batterie-Management-System einen Datenspeicher zum Speichern wenigstens eines Akkuladeparameters aufweist und an der Datenschnittstelle den wenigstens einen Akkuladeparameter für ein externes Ladegerät zur Verfügung stellt, und wobei der wenigstens eine Akkuladeparameter über eine Eingabe an die Benutzerschnittstelle konfigurierbar ist.

Die WO 2014/120912 A1 betrifft ein Batterieladesystem, das einen oder mehrere Batteriepacks enthalten kann, von denen jeder eine Steuerschaltung und eine Schaltanordnung enthält, und ein Ladegerät, das einen Leistungsabschnitt und eine Ladesteuerung enthält. Die Ladesteuerung und/oder die Steuerschaltung können dazu konfiguriert sein, den Betrieb der Schaltanordnung zu beeinflussen, um das Laden des einen oder der mehreren Batteriepakete zu steuern.

Die US 2011/133571 A1 bezieht sich auf eine Schutzschaltung zum Schützen einer Schaltung, die von einer Sekundärbatterie mit Energie versorgt wird, und auf ein Batteriepack mit einer solchen Schutzschaltung.

Die WO 2014/119184 A1 betrifft eine Elektrowerkzeugmaschine, umfassend eine Vielzahl von Batteriepaketen, die jeweils eine Batterie enthalten, einen Befestigungsabschnitt, der die Vielzahl von Batteriepaketen lösbar befestigt und eine Vielzahl von Batteriepacks, eine Stromquellenbildungseinheit zum Bilden einer Stromquelle durch Verbinden jeder Batterie des Batteriepacks in Reihe miteinander, einen Motor, der durch elektrische Energie von der Stromquelle betrieben wird, und eine Batterie, die nicht die größte verbleibende hat Kapazität unter den Batterien und eine Batterieladeeinheit, die die zumindest eine zu ladende Batterie mit in der Elektrowerkzeugmaschine erzeugter elektrischer Energie als eine zu ladende Batterie lädt.

Das Dokument EP 1 375 240 A1 offenbart die Anpassung der Ladekapazität im Hinblick auf die von einer Last erzeugte Regenerationsenergie. Diese Anpassung erfolgt durch das Lade-/ Batteriepaketsteuergerät selbst und nicht durch die Last/den Verbraucher.

In Anbetracht des bekannten Stands der Technik besteht die Aufgabe der vorliegenden Erfindung darin, ein akkubetriebenes Gerät bereitzustellen, das sich vorteilhaft zur Verwendung mit einem konfigurierbaren Akkupack eignet.

Schließlich ist es auch Aufgabe der Erfindung, ein externes Ladegerät bereitzustellen, das sich vorteilhaft zur Verwendung mit einem konfigurierbaren Akkupack eignet.

Es ist auch eine Aufgabe der Erfindung, ein flexibles System aus einem Gerät und einem konfigurierbaren Akkupack sowie ein vorteilhaftes Verfahren zur Konfiguration eines Akkupacks bereitzustellen.

Die Aufgabe wird für das akkubetriebene Gerät durch die Merkmale des Anspruchs 1 und bezüglich des externen Ladegeräts durch die Merkmale des Anspruchs 3 gelöst. Betreffend das System wird die Aufgabe durch Anspruch 6 und hinsichtlich des Verfahrens durch die Merkmale des Anspruchs 9 gelöst.

Die abhängigen Ansprüche und die nachfolgend beschriebenen Merkmale betreffen vorteilhafte Ausführungsformen und Varianten der Erfindung.

Es ist ein konfigurierbares Akkupack vorgesehen, aufweisend eine Steuereinrichtung mit einem Datenspeicher zum Speichern wenigstens eines Akkuladeparameters.

Mit einem Akkupack ist sowohl ein Akkumulator mit einer einzelnen Akkumulatorzelle (auch Sekundärzelle genannt), als auch ein zusammengeschaltetes Paket mit mehreren Akkumulatorzellen gemeint. Mit einem Akkupack kann auch ein Speicher für elektrische Energie gemeint sein, der nicht oder nicht ausschließlich elektrochemisch aufgebaut ist, also zum Beispiel ein Kondensator.

Die Steuereinrichtung kann insbesondere ein in das Akkupack integriertes Batterie-Management-System (BMS) aufweisen oder als Batterie-Management-System ausgebildet sein. Ein Batterie-Management-System dient insbesondere der Überwachung und Regelung eines Akkupacks und wird teilweise auch als Power-Management-System (PMS) bezeichnet.

Die Steuereinrichtung kann beliebige elektrische Schaltungen umfassen. Die Steuereinrichtung kann aus mehreren einzelnen Elektronikkomponenten bestehen, die gegebenenfalls dezentral bzw. physisch in dem Akkupack verteilt angeordnet sein können. Bei der Steuereinrichtung kann es sich aber auch um eine einzelne, abgegrenzte Einheit handeln.

Die Steuereinrichtung kann vorzugsweise einen Mikroprozessor aufweisen oder als Mikroprozessor ausgebildet sein. Anstelle eines Mikroprozessors kann auch eine beliebige weitere Einrichtung zur Implementierung der Steuereinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA) und/oder eine programmierbare logische Anordnung (PLA).

Der Datenspeicher kann beispielsweise in einem Mikroprozessor bzw. Batterie-Management-System integriert sein. Der Datenspeicher kann aber auch unabhängig von dem Mikroprozessor bzw. Batterie-Management-System ausgebildet sein. Mit einem Datenspeicher kann insbesondere ein semi-permanenter Speicher, d. h. ein nicht flüchtiger Speicher, dessen Informationen im Betrieb veränderbar sind, vorgesehen sein. Beispielsweise kann ein EPROM, EEPROM, Flash-EEPROM, FRAM oder MRAM-Speicher vorgesehen sein.

Das konfigurierbare Akkupack kann eine mit der Steuereinrichtung verbundene Datenschnittstelle aufweisen. Die Steuereinrichtung und die Datenschnittstelle können eingerichtet sein, um den wenigstens einen Akkuladeparameter an der Datenschnittstelle für ein mit dem Akkupack verbundenes Gerät (insbesondere das nachfolgend genannte ackubetriebene Gerät oder das externe Ladegerät) zur Verfügung zu stellen.

Mit einer Datenschnittstelle kann eine analoge Datenschnittstelle und/oder eine digitale Datenschnittstelle gemeint sein. Es kann insbesondere ein Bussystem vorgesehen sein, wobei mehrere Daten seriell und/oder parallel über die Datenschnittstelle übertragbar sind. Es kann auch vorgesehen sein, dass sich die Datenschnittstelle aus mehreren Einzelschnittstellen zusammensetzt.

Vorzugsweis weist die Datenschnittstelle wenigstens eine Datenleitung zur Datenübertragung auf. Es können aber auch mehrere Datenleitung vorgesehen sein, beispielsweise zwei, drei oder noch mehr Datenleitungen.

Damit, dass die Steuereinrichtung an der Datenschnittstelle den wenigstens einen Ackuladeparameter für das externe Gerät zur Verfügung stellt, kann gemeint sein, dass die Steuereinrichtung den wenigstens einen Akkuladeparameter permanent an der Datenschnittstelle zur Verfügung stellt, periodisch zur Verfügung stellt oder auf Anforderung - beispielsweise durch das Gerät - zur Verfügung stellt.

Bei Vorhandensein von mehr als einem Akkuladeparameter kann vorgesehen sein, dass die Steuereinrichtung nur eine Auswahl der Akkuladeparameter für das Gerät an der Datenschnittstelle zur Verfügung stellt. Beispielsweise kann vorgesehen sein, dass nur einer der Akkuladeparameter für das Gerät zur Verfügung gestellt wird.

Es kann auch vorgesehen sein, dass die Akkuladeparameter sequentiell, d. h. in zeitlicher Abfolge, für das Gerät zur Verfügung gestellt werden.

Es kann vorgesehen sein, dass die Steuereinrichtung und die Datenschnittstelle eingerichtet sind, um den wenigstens einen Akkuladeparameter über eine Eingabe an der Datenschnittstelle zu konfigurieren.

Damit, dass der wenigstens eine Akkuladeparameter über die Eingabe an die Datenschnittstelle konfigurierbar ist, kann gemeint sein, dass der Akkuladeparameter beliebig einstellbar ist. Es kann aber auch vorgesehen sein, dass der Akkuladeparameter in diskreten Stufen, also zum Beispiel auf Grundlage einer vordefinierten Tabelle, auswählbar und somit konfigurierbar ist.

Es kann vorgesehen sein, dass die Steuereinrichtung über die Datenschnittstelle dazu anweisbar ist, den Akkuladeparameter im Datenspeicher zu modifizieren. Es kann aber auch vorgesehen sein, dass der wenigstens eine Akkuladeparameter über die Datenschnittstelle direkt in dem Datenspeicher veränderbar ist.

Es kann vorgesehen sein, dass bei Verwendung mehrerer Akkuladeparameter nicht alle Akkuladeparameter, sondern nur eine Auswahl, beispielsweise auch nur genau ein Ackuladeparameter, konfigurierbar ist.

Die Konfiguration des wenigstens einen Akkuladeparameters kann in digitaler, analoger oder gemischter Form erfolgen. Somit kann beispielsweise die Steuereinrichtung zumindest teilweise analog und/oder digital ausgebildet sein. Selbiges gilt für die Datenschnittstelle und den Datenspeicher.

Auf vorteilhafte Weise kann das konfigurierbare Akkupack von dem Gerät automatisch oder manuell parametrisierbar sein. Somit kann das Akkupack beispielswiese über ein angeschlossenes akkubetriebenes Gerät oder über ein angeschlossenes externes Ladegerät konfigurierbar sein.

Das konfigurierbare Akkupack kann somit vielfältig mit unterschiedlichen Geräten und in unterschiedlichen Anwendungen optimal verwendbar und auf die jeweiligen Bedürfnisse des Gesamtsystems automatisch oder manuell anpassbar sein. Auf diese Weise kann die Performanz des Akkupacks optimiert und das Akkupack außerdem vor Überlastung im Arbeitsfall geschützt werden.

Beispielsweise kann ein standardisiertes Hochleistungsakkupack in Massenproduktion hergestellt werden, das anschließend flexibel über das Gerät konfigurierbar ist. Es ist somit möglich, bei gleichbleibender Hardware bzw. bei gleichbleibendem Aufbau über rein softwaretechnische Maßnahmen Ladeparameter des Akkupacks einzustellen.

Das Akkupack kann bei Auslieferung mit Standardparametern vorbelegt sein, die dann in der Anwendung sinnvoll anpassbar sind. Die Herstellung eines derartigen Akkupacks kann wirtschaftlich vorteilhaft sein, da hohe Stückzahlen eines einzigen Akkupacktyps hergestellt werden können.

In einer vorteilhaften Weiterbildung der Erfindung kann vorgesehen sein, dass über die Eingabe an der Datenschnittstelle eine nutzbare Gesamtkapazität des Akkupacks konfigurierbar ist.

Mit einer nutzbaren Gesamtkapazität ist insbesondere eine Kapazität des Akkupacks gemeint, die nicht zwingend der hardwareseitig erreichbaren Gesamtkapazität des Ackupacks entspricht.

Erfindungsgemäß ist vorgesehen sein, dass die nutzbare Gesamtkapazität kleiner ist als eine maximal erreichbare, hardwarebasierte Gesamtkapazität des Akkupacks.

Dadurch, dass die nutzbare Gesamtkapazität des Akkupacks flexibel konfigurierbar ist, kann sichergestellt werden, dass selbst ein "Hochleistungsakkupack" aufgrund der gegebenenfalls beschränkten Gesamtkapazität gefahrlos transportiert und gelagert werden kann. Erst später, wenn das Akkupack verwendet werden soll, kann das Akkupack gegebenenfalls wieder umkonfiguriert werden, wodurch die tatsächliche, hardwarebasierte Gesamtkapazität des Akkupacks nutzbar wird.

Insbesondere kann vorgesehen sein, dass das Akkupack ein Lithium-Ionen-Akkupack ist. Es ist bekannt, dass Lithium-Ionen-Akkupacks aufgrund ihrer hohen Energiedichte gefährlich in der Handhabung sein können. Aufgrund dessen ist die Erfindung insbesondere für derartige Akkupacks vorteilhaft. Bei dem erfindungsgemäßen Akkupack kann es sich aber selbstverständlich auch um einen Nickel-Metall-Hybrid-Akkumulator, Nickel-Kadmium-Akkumulator oder Bleiakkumulator handeln. Grundsätzlich ist die Erfindung nicht auf einen bestimmten Typ Akkupack begrenzt zu verstehen.

Es kann vorgesehen sein, dass das Akkupack eine Betriebsspannung von 18 Volt oder 36 Volt liefert. Selbstverständlich kann das Akkupack für beliebige Spannungen und Ströme ausgebildet sein.

Ein weiterer Vorteil der flexiblen Konfiguration der nutzbaren Gesamtkapazität des Ackupacks kann darin bestehen, dass ein Benutzer des Akkupacks selbst entscheiden kann, ob er das Akkupack als Hochleistungsakkupack, d. h. mit sehr großer Kapazität, oder als langlebiges Akkupack, d. h. also zum Beispiel mit nur 80 % seiner hardwareseitig maximalen Kapazität, zu betreiben ist.

Gemäß einer Weiterbildung der Erfindung kann vorgesehen sein, dass es sich bei dem wenigstens einen Akkuladeparameter um eine Nennspannung, um eine Ladeschlussspannung und/oder um die nutzbare Gesamtkapazität handelt.

Insbesondere durch Beeinflussung der Ladeschlussspannung lässt sich üblicherweise der Zeitpunkt festlegen, an dem ein Ladegerät von einer 80 %-igen Aufladung des Ackupacks ausgeht. Eine Modifikation der Ladeschlussspannung kann folglich das Ladeverfahren und damit die nutzbare Gesamtkapazität des Akkupacks beeinflussen.

Gegebenenfalls kann auch vorgesehen sein, eine Nennspannung zu konfigurieren, wobei das Ladegerät über die Nennspannung auf eine "scheinbare" Gesamtkapazität und Ladeschlussspannung schließt. Auch auf diese Weise kann schließlich die nutzbare Gesamtkapazität vorgegeben werden.

Auch eine direkte Vorgabe der nutzbaren Gesamtkapazität kann vorgesehen sein.

Es kann sogar vorgesehen sein, dass in dem Akkupack eine vollständige Ladekurve definierbar ist, die das Akkupack anschließend an das Ladegerät zu übermitteln vermag, und die das Ladegerät anschließend für den Ladeprozess heranzieht. Mit einer Ladekurve kann beispielsweise eine Strom-Zeit-Kurve, Spannungs-Zeit-Kurve oder Strom-Spannungs-Kurve gemeint sein.

In einer Ausgestaltung der Erfindung kann vorgesehen sein, dass die nutzbare Gesamtkapazität des Akkupacks in mehreren Stufen konfigurierbar ist, vorzugsweise umfassend die Bereiche < 100 Wattstunden und ≥ 100 Wattstunden. Beispielsweise kann vorgesehen sein, dass die nutzbare Gesamtkapazität des Akkupacks vor einem Transport oder Lagervorgang auf 99 Wattstunden konfiguriert wird. Nach Abschluss des Transport- oder Lagervorgangs, insbesondere vor Inbetriebnahme des Akkupacks, kann der wenigstens eine Akkuladeparameter schließlich derart konfiguriert werden, dass eine nutzbare Gesamtkapazität des Akkupacks von ≥ 100 Wattstunden möglich ist. Die Verwendung einer Grenze von 100 Wattstunden kann von Vorteil sein, da bekanntermaßen ein Transport des Akkupacks mit einer nutzbaren Gesamtkapazität von < 100 Wattstunden verhältnismäßig gefahrlos und somit ohne größere Umstände möglich ist.

In einer Weiterbildung der Erfindung kann das konfigurierbare Akkupack eine Akkupackschnittstelle zur lösbaren elektrischen und mechanischen Verbindung des Akkupacks mit dem Gerät aufweisen, insbesondere zur Versorgung eines akkubetriebenen Geräts und/oder zum Laden des Akkupacks durch ein externes Ladegerät.

Die Akkupackschnittstelle kann eine mechanische Kodierung aufweisen, um nur in vorbestimmten Orientierungen mit dem Gerät verbindbar zu sein und/oder um nur mit einer definierten Auswahl von Gerätetypen verbindbar zu sein.

Die Akkupackschnittstelle kann Rastmittel aufweisen, um eine lösbare Verrastung mit einer korrespondierenden Geräteschnittstelle des Geräts bereitzustellen, beispielsweise eine Kombination aus Rastnasen/Rasthaken und Rastnuten/Rücksprüngen. Die Akkupackschnittstelle und die Geräteschnittstelle können in der Art einer Steckverbindung ausgebildet sein.

Die Akkupackschnittstelle kann insbesondere eine Lade- und/oder Versorgungsschnittstelle aufweisen, die einen Kathodenkontakt und einen Anodenkontakt umfasst. Über die Akkupackschnittstelle kann elektrische Energie aus dem Akkupack entnommen oder dem Akkupack zugeführt werden.

In einer Weiterbildung der Erfindung kann vorgesehen sein, dass die Datenschnittstelle in die Akkupackschnittstelle integriert ist.

Die Akkupackschnittstelle kann optional auch noch weitere Schnittstellen aufweisen.

In einer Weiterbildung der Erfindung kann insbesondere vorgesehen sein, dass die Datenschnittstelle eines oder mehrere Kontaktelemente zur elektrischen und mechanischen Kontaktierung mit einem oder mehreren korrespondierenden Gegenkontaktelementen des Geräts aufweist (insbesondere zur Kontaktierung von Gegenkontaktelementen einer Geräteschnittstelle des Geräts).

Bei den Kontaktelementen bzw. Gegenkontaktelementen kann es sich beispielsweise um Flachkontakte, Stiftkontakte, insbesondere gefederte Stiftkontakte, Kontaktfedern beliebiger Bauweise und/oder um Schleifkontakte handeln. Grundsätzlich können beliebige Kontaktarten vorgesehen sein, beispielsweise auch eine Kombination aus Stecckontakten und Buchsenkontakten.

In einer vorteilhaften Weiterbildung der Erfindung kann vorgesehen sein, dass die Datenschnittstelle drahtlos ausgebildet ist, insbesondere als Bluetooth-Schnittstelle, WLAN-Schnittstelle oder RFID-Schnittstelle.

Über derartige drahtlose Schnittstellen kann eine Konfiguration der Akkuladeparameter durch das Gerät äußerst komfortabel erfolgen. Es kann auch eine Kombination mehrerer drahtloser Schnittstellen und/oder mehrerer konventioneller Schnittstellen vorgesehen sein.

Die drahtlose Datenschnittstelle kann optional mit einem mobilen Endgerät verbindbar sein, beispielsweise mit einem Smartphone oder einem Tablet-Computer. Der Status des Akkupacks kann somit beispielsweise mittels einer auf dem mobilen Endgerät ausgeführten Software-Applikation erfasst werden. Auch die Möglichkeit der Parametrisierung des Akkupacks bzw. der Akkuladeparameter kann durch die Verwendung eines mobilen Endgeräts und/oder einer Software-Applikation verbessert sein.

Die Datenschnittstelle kann als serielle Schnittstelle oder als parallele Schnittstelle ausgebildet sein. Die Verwendung einer seriellen Schnittstelle kann von Vorteil sein, da die Datenschnittstelle hierdurch kompakt ausgebildet sein kann.

Die Erfindung betrifft ein in Patentanspruch 1 angegebenes akkubetriebenes Gerät zur Verwendung mit einem konfigurierbaren Akkupack, insbesondere zur Verwendung mit einem konfigurierbaren Akkupack gemäß den vorstehenden und nachfolgenden Ausführungen.

Die Verbrauchersteuereinheit kann beliebige elektrische Schaltungen umfassen. Die Verbrauchersteuereinheit kann aus mehreren einzelnen Elektronikkomponenten bestehen, die gegebenenfalls dezentral bzw. physisch in dem akkubetriebenen Gerät verteilt angeordnet sein können. Bei der Verbrauchersteuereinheit kann es sich aber auch um eine einzelne, abgegrenzte Einheit handeln. Die Verbrauchersteuereinheit kann vorzugsweise einen Mikroprozessor aufweisen oder als Mikroprozessor ausgebildet sein. Anstelle eines Mikroprozessors kann auch eine beliebige weitere Einrichtung zur Implementierung der Verbrauchersteuereinheit vorgesehen sein, beispielsweise die vorstehend im Zusammenhang mit der Steuereinrichtung bereits genannten Einrichtungen. Dies gilt auch für die nachfolgend noch genannte Ladesteuereinheit des externen Ladegeräts.

Die Geräteschnittstelle kann eine mechanische Kodierung aufweisen, um nur in vorbestimmten Orientierungen mit dem Akkupack verbindbar zu sein und/oder um nur mit einer definierten Auswahl von Akkupacktypen verbindbar zu sein. Die Geräteschnittstelle kann außerdem Rastmittel aufweisen, um eine lösbare Verrastung mit der Akkupackschnittstelle des Akkupacks bereitzustellen, beispielsweise eine Kombination aus Rastnasen/Rasthaken und Rastnuten/Rücksprüngen. Die Geräteschnittstelle und die Akkupackschnittstelle können in der Art einer Steckverbindung ausgebildet sein. Dies gilt auch für die nachfolgend noch genannte Geräteschnittstelle des externen Ladegeräts.

Das akkubetriebene Gerät weist eine mit der Datenschnittstelle des Akkupacks elektrisch verbindbare Konfigurationsschnittstelle auf, die eingerichtet ist, um wenigstens einen Akkuladeparameter des Akkupacks nach Vorgabe der Verbrauchersteuereinheit unter Berücksichtigung einer Benutzervorgabe und/oder unter Berücksichtigung elektrischer Anforderungen des elektrischen Verbrauchers über die Datenschnittstelle des Akkupacks zu konfigurieren.

Vorzugsweise, aber nicht notwendigerweise, kann der wenigstens eine Akkuladeparameter zuvor von dem Akkupack auslesbar an der Datenschnittstelle bereitgestellt werden und/oder von dem akkubetriebenen Gerät über die Datenschnittstelle und die Konfigurationsschnittstelle erfasst werden.

Das akkubetriebene Gerät vermag das konfigurierbare Akkupack flexibel an die Bedürfnisse des Verbrauchers anzupassen und damit den Verbraucher sowie das Akkupack vor Überlastungssituationen zu schützen. Außerdem kann die Performanz des Akkupacks für den Betrieb des spezifischen Verbrauchers optimiert werden.

Das Akkupack kann grundsätzlich für die Versorgung beliebiger elektrischer Geräte verwendbar sein.

In einer vorteilhaften Weiterbildung der Erfindung kann aber insbesondere vorgesehen sein, dass das akkubetriebene Gerät als Elektrowerkzeugmaschine ausgebildet ist.

Als Elektrowerkzeugmaschine können insbesondere handgeführte Elektrowerkzeugmaschinen, wie Bohrmaschinen, Winkelschleifer oder dergleichen, als auch im Betrieb feststehende, d. h. stationäre oder halbstationäre Geräte, wie Tischkreissägen oder dergleichen, verstanden werden.

Erfindungsgemäß ist vorgesehen, dass der elektrische Verbraucher als Elektromotor ausgebildet ist.

Erfindungsgemäß ist vorgesehen, dass das akkubetriebene Gerät eine elektrische Rekuperationseinrichtung aufweist die eingerichtet ist, um bei einem Verlangsamen des Elektromotors elektrische Energie in das konfigurierbare Akkupack zurückzuspeisen. Beispielsweise bei Winkelschleifern kann ein regeneratives Bremsverfahren bzw. eine Rekuperationseinrichtung besonders vorteilhaft zum Einsatz kommen. Elektrische Bremsströme können dabei zurück in das Akkupack geleitet werden, was zu einer entsprechenden Spannungserhöhung in den einzelnen Akkuzellen führt. Wenn das Akkupack unmittelbar zuvor bis zu seiner maximalen Hardwarekapazität aufgeladen wurde, können bei diesem Prozess Spannungsspitzen auftreten, die die zulässige Zellenspannung übersteigen. Hierdurch können die Akkuzellen geschädigt werden, was zu einem Ausfall oder zumindest zu einer Lebensdauerreduzierung führt. Ferner kann eine im Betrieb möglichst zu vermeidende Überspannungsabschaltung ausgelöst werden. Auch das Bremsverhalten des Elektromotors und damit die Handhabung des Geräts während der Verwendung kann hiervon unvorhersehbar beeinflusst werden, was insbesondere bei einer Elektrowerkzeugmaschine zu gefährlichen Situationen führen kann.

Die genannten Probleme können vermieden werden, wenn die Akkuladeparameter vor dem Ladeprozess derart umkonfiguriert bzw. angepasst werden, dass das Akkupack von einem Ladegerät nicht mehr bis zu seiner hardwarebezogenen Gesamtkapazität aufgeladen wird. Das Ladegerät kann den Ladeprozess auf Grundlage der modifizierten Akkuladeparameter früher beenden, wodurch das Akkupack anschließend bei der Rekuperation nicht mehr überlastet wird.

Auf vorteilhafte Weise kann durch eine geeignete Konfiguration der Akkuladeparameter eine Überspannungsreserve bereitgestellt werden, beispielsweise im Rahmen der ersten Verwendung des Akkupacks in dem entsprechenden akkubetriebenen Gerät oder wenn eine schädliche Spannungsspitze oder sonstige Überlastung erstmals auftritt. Auf diese Weise kann die Lebensdauer des Akkupacks erhöht werden.

Die Erfindung betrifft auch ein in Patentanspruch 3 angegebenes externes Ladegerät zum Laden eines konfigurierbaren Akkupacks, insbesondere zum Laden eines konfigurierbaren Akkupacks gemäß den vorstehenden und nachfolgenden Ausführungen.

Die Ladesteuereinheit kann beliebige elektrische Schaltungen umfassen, wie vorstehend bereits im Rahmen der Steuereinrichtung des Akkupacks oder im Rahmen der Verbrauchersteuereinheit beschrieben.

Das externe Ladegerät weist eine mit einer Datenschnittstelle des Akkupacks elektrisch verbindbare Konfigurationsschnittstelle auf, die eingerichtet ist, um wenigstens einen an der Datenschnittstelle des Akkupacks bereitgestellten Akkuladeparameter zu erfassen und nach Vorgabe der Ladesteuereinheit unter Berücksichtigung einer Benutzervorgabe zu konfigurieren.

Das externe Ladegerät kann somit verwendet werden, um die Akkuladeparameter in Abhängigkeit der vorgesehenen Anwendung zu optimieren.

Beispielsweise kann vorgesehen sein, dass die nutzbare Gesamtkapazität des Akkupacks unter Berücksichtigung der Benutzervorgabe erhöht oder verringert werden kann, beispielsweise während des ersten Ladevorgangs in dem externen Ladegerät. Beispielsweise kann die Kapazität des konfigurierbaren Akkupacks während des ersten Ladevorgangs auf einen Wert über 100 Wattstunden erhöht werden.

In einer Weiterbildung der Erfindung kann vorgesehen sein, dass die Konfigurationsschnittstelle des akkubetriebenen Geräts oder des externen Ladegeräts in die Geräteschnittstelle integriert ist.

Eine Verbindung mit der Datenschnittstelle des Akkupacks kann damit gleichzeitig mit der elektrischen Versorgungs- oder Ladeverbindung hergestellt werden, ohne dass weitere Maßnahmen erforderlich sind.

Gemäß einer Weiterbildung der Erfindung kann vorgesehen sein, dass die Konfigurationsschnittstelle des akkubetriebenen Geräts oder des externen Ladegeräts eines oder mehrere Gegenkontaktelemente zur elektrischen und mechanischen Kontaktierung mit einem oder mehreren korrespondierenden Kontaktelementen der Datenschnittstelle des Akkupacks aufweist.

Grundsätzlich können beliebige Kontaktarten vorgesehen sein, wie vorstehend bereits beschrieben.

In einer vorteilhaften Weiterbildung der Erfindung kann vorgesehen sein, dass die Konfigurationsschnittstelle des akkubetriebenen Geräts oder des externen Ladegeräts drahtlos ausgebildet ist, insbesondere als Bluetooth-Schnittstelle, WLAN-Schnittstelle oder RFID-Schnittstelle.

Über derartige drahtlose Schnittstellen kann eine Konfiguration der Akkuladeparameter besonders komfortabel erfolgen.

Die Erfindung betrifft auch ein System, umfassend ein Gerät gemäß den vorstehenden und nachfolgenden Ausführungen, beispielsweise also das akkubetriebene Gerät oder das externe Ladegerät, und ein konfigurierbares Akkupack, insbesondere ein konfigurierbares Akkupack gemäß den vorstehenden und nachfolgenden Ausführungen.

Auf vorteilhafte Weise kann eine Änderung des Gesamtsystems durch eine individuelle Parametrisierung der Ladeparameter des Akkupacks ermöglicht werden, wodurch das Verhalten des Akkupacks permanent oder zumindest temporär bei Verwendung mit einem akkubetriebenen Gerät und/oder bei Verwendung mit dem externen Ladegerät verändert werden kann.

Die Erfindung betrifft außerdem auch ein in Patentanspruch 9 angegebenes Verfahren zur Konfiguration eines konfigurierbaren Akkupacks, insbesondere eines konfigurierbaren Akkupacks gemäß den vorstehenden und nachfolgenden Ausführungen.

In einer vorteilhaften Weiterbildung der Erfindung kann vorgesehen sein, dass der wenigstens eine Akkuladeparameter von dem Gerät konfiguriert wird, um ein nachfolgendes Ladeverfahren zu beeinflussen.

Es kann vorgesehen sein, dass die Akkuladeparameter, die an der Datenschnittstelle zur Verfügung stehen, eine Kennlinie eines Ladeverfahrens beeinflussen und/oder das Ladeverfahren festlegen.

Dadurch, dass die an der Datenschnittstelle zur Verfügung gestellten Daten konfigurierbar sind, emuliert das Akkupack im Rahmen eines Ladeprozesses gegebenenfalls das Vorhandensein eines schwächeren Akkupacks. Das externe Ladegerät nimmt somit ein schwächeres Akkupack wahr und wählt selbstständig ein entsprechendes Ladeverfahren bzw. eine entsprechende Ladekennlinie. Das externe Ladegerät bricht somit einen Ladevorgang beispielsweise früher ab, wodurch das Akkupack nicht vollständig aufladbar ist, obwohl dies hardwareseitig möglich wäre.

Schließlich kann das Akkupack beispielsweise relativ gefahrlos und somit unkompliziert transportiert und gelagert werden.

Außerdem kann das Akkupack anwendungsspezifisch zur sicheren Verwendung mit einer Rekuperationseinrichtung eines beliebigen akkubetriebenen Geräts angepasst werden.

Erfindungsgemäß ist vorgesehen, dass der wenigstens eine Akkuladeparameter von dem Gerät unter Berücksichtigung elektrischer Anforderungen einer elektrische Rekuperationseinrichtung konfiguriert wird, um sicherzustellen, dass trotz des Zurückspeisens elektrischer Energie in das Akkupack eine Überladung des Akkupacks vermieden wird.

Durch die mittelbare Beeinflussung eines Ladeverfahrens durch die Konfiguration der Akkuladeparameter kann das Akkupack somit also besonders flexibel einsetzbar sein, beispielsweise auch zur Rekuperation bei Verwendung mit einem Elektromotor.

Merkmale, die im Zusammenhang mit einem der Gegenstände der Erfindung, namentlich gegeben durch das akkubetriebene Gerät, das externe Ladegerät, das System und das Verfahren beschrieben wurden, sind auch für die anderen Gegenstände der Erfindung vorteilhaft umsetzbar. Insbesondere sei betont, dass das "akkubetriebene Gerät" und das "externe Ladegerät" in der vorliegenden Beschreibung und in den Ansprüchen mitunter zusammengefasst als "Gerät" bezeichnet wird. Der vereinfachende Begriff "Gerät" kann sich daher auf das "akkubetriebene Gerät" und/oder auf das "externe Ladegerät" beziehen. Alle Merkmale, die im Rahmen der Beschreibung und der Patentansprüche bezüglich des "konfigurierbaren Akkupacks" beschrieben wurden, sind auch im Rahmen des Geräts (akkubetriebenes Gerät oder externes Ladegerät) umsetzbar, dies gilt insbesondere für die Merkmale der von Patentanspruch 1 abhängigen Patentansprüche. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1 % oder weniger, und ganz besonders bevorzugt ±0, 1 % oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: ein Schaltungsdiagramm eines erfindungsgemäß konfigurierbaren Akkupacks;
- Figur 2: eine perspektivische Darstellung eines konfigurierbaren Akkupacks mit einer Akkupackschnittstelle;
- Figur 3: ein erfindungsgemäßes System aus einem akkubetriebenen Gerät und einem konfigurierbaren Akkupack;
- Figur 4: ein erfindungsgemäßes System aus einem externen Ladegerät und einem konfigurierbaren Akkupack; und
- Figur 5: ein beispielhaftes Verfahren zu Konfiguration eines Akkupacks.

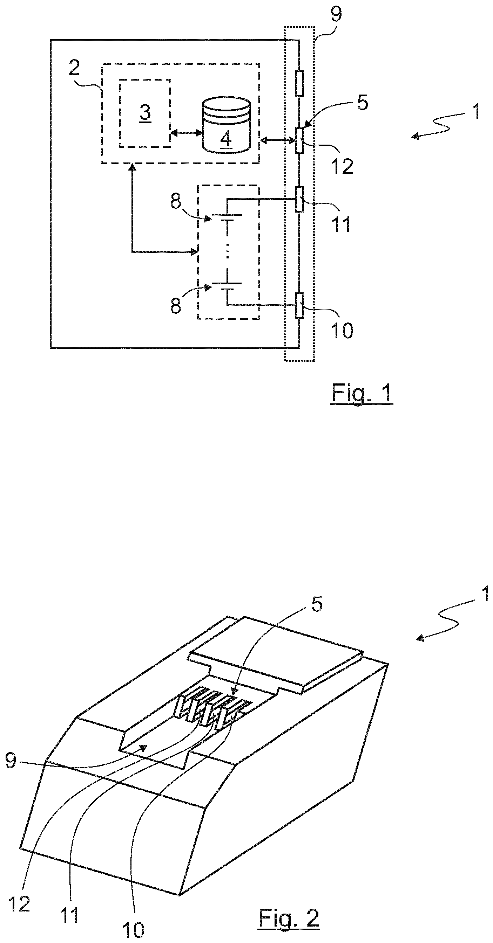

In Figur 1 ist schematisch das Schaltungsdiagramm eines erfindungsgemäßen, konfigurierbaren Akkupacks 1 dargestellt. Figur 2 zeigt eine perspektivische Darstellung.

Das Akkupack 1 umfasst eine integrierte Steuereinrichtung 2, die beispielsweise ein Batterie-Management-System 3 aufweist. Die Steuereinrichtung 2 weist außerdem einen Datenspeicher 4 zum Speichern wenigstens eines Akkuladeparameters auf. Die Steuereinrichtung 2 oder das Batterie-Management-System 3 kann beispielsweise einen Mikrocontroller aufweisen oder als Mikrocontroller ausgebildet sein, wobei der Mikrocontroller mit dem Datenspeicher 4 zum Lesen und Schreiben von Daten (insbesondere der Akkuladeparameter) verbunden ist und/oder der einen entsprechenden interner Datenspeicher aufweist.

Das konfigurierbare Akkupack 1 weist eine mit der Steuereinrichtung 2 verbundene Datenschnittstelle 5 auf. Der wenigstens eine Akkuladeparameter wird von der Steuereinrichtung 2 an der Datenschnittstelle 5 für ein mit dem Akkupack 1 verbundenes Gerät 6, 7 zur Verfügung gestellt.

Der wenigstens eine Akkuladeparameter ist über eine Eingabe an die Datenschnittstelle 5 konfigurierbar. Es kann beispielsweise vorgesehen sein, dass die Steuereinrichtung 2 über die Datenschnittstelle 5 dazu angewiesen wird, den Akkuladeparameter im Datenspeicher 4 zu modifizieren. Es kann aber auch vorgesehen sein, dass der wenigstens eine Akkuladeparameter über die Datenschnittstelle 5 direkt in dem Datenspeicher 4 veränderbar ist.

Das Akkupack 1 umfasst Akkuzellen 8, vorzugsweise eine, zwei, drei oder vier, ggf. auch einhundert oder mehr, die zu einer Reihenschaltung verschaltet sind. Selbstverständlich kann auch vorgesehen sein, dass mehrere Akkuzellen 8 zur Erhöhung der Gesamtkapazität parallel bei gleichbleibender Akkuspannung miteinander verschaltet sind. Insbesondere kann auch eine Gruppenschaltung, also eine Kombination aus Reihenschaltung und Parallelschaltung, vorgesehen sein.

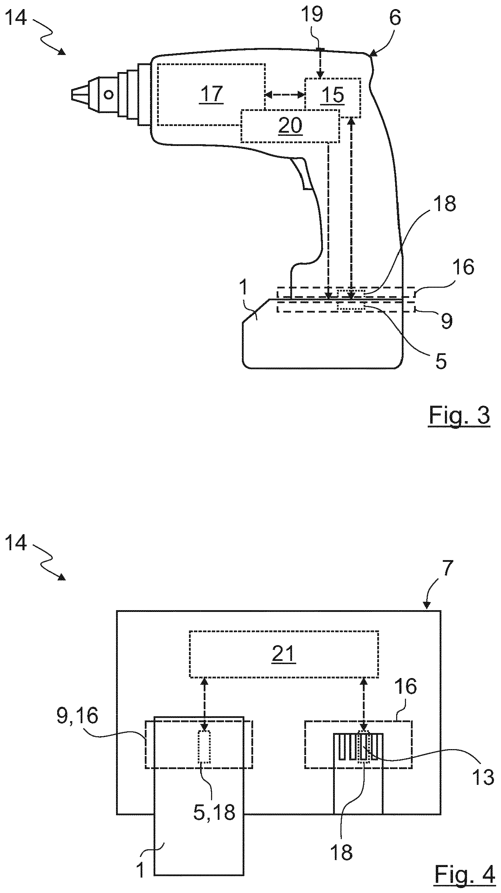

Zur lösbaren elektrischen und mechanischen Verbindung mit dem Gerät 6, 7 weist das Akkupack 1 eine Akkupackschnittstelle 9 auf, insbesondere zur Versorgung eines akkubetriebenen Geräts 6 (vgl. Figur 3) und/oder zum Laden des Akkupacks 1 durch ein externes Ladegerät 7 (vgl. Figur 4). Die Akkupackschnittstelle 9 umfasst einen Kathodenkontakt 10 und einen Anodenkontakt 11. Über die Akkupackschnittstelle 9 kann elektrische Energie aus dem Akkupack 1 entnommen oder dem Akkupack 1 zugeführt werden.

Die Datenschnittstelle 5 ist vorliegend in die Akkupackschnittstelle 9 integriert und weist ein Kontaktelement 12 zur elektrischen und mechanischen Kontaktierung eines korrespondierenden Gegenkontaktelements 13 (vgl. Figur 4) des Geräts 6, 7 auf. Grundsätzlich kann die Datenschnittstelle 5 auch noch weitere Datenleitungen bzw. Kontaktelemente aufweisen.

Es können außerdem auch noch weitere Schnittstellen an dem Akkupack 1 vorgesehen sein, die vorliegend jedoch nicht im Detail diskutiert werden sollen. Beispielsweise kann eine Schnittstelle vorgesehen sein, über die das Akkupack 1 ein Temperatursignal und/oder Fehlersignal übermitteln kann.

Die Datenschnittstelle 5 kann außerdem auch drahtlos ausgebildet sein, insbesondere als Bluetooth-Schnittstelle, WLAN-Schnittstelle oder RFID-Schnittstelle. Das Akkupack 1 kann somit durch das Gerät 6, 7 sogar kabellos konfigurierbar sein. Bei dem Gerät 6, 7 kann es sich beispielsweise auch um einen PC, einen Tabletcomputer oder um ein Smartphone handeln. Beispielsweise kann eine Konfiguration der Akkuladeparameter unter Verwendung einer Applikation auf einem Smartphone besonders komfortabel erfolgen.

Insbesondere kann vorgesehen sein, dass über die Eingabe an die Datenschnittstelle 5 eine nutzbare Gesamtkapazität des Akkupacks 1 konfigurierbar ist. Die nutzbare Gesamtkapazität ist vorzugsweise kleiner oder gleich einer maximal erreichbaren, hardwarebasierten Gesamtkapazität des Akkupacks 1.

Bei dem wenigstens einen Akkuladeparameter kann es sich vorzugsweise um eine Nennspannung und/oder um eine Ladeschlussspannung und/oder um die nutzbare eine Gesamtkapazität handeln. Vorzugsweise ist hierdurch die nutzbare Gesamtkapazität des Akkupacks 1 in mehreren Stufen konfigurierbar, insbesondere umfassend die Bereiche < 100 Wattstunden und ≥ 100 Wattstunden. Auch eine stufenlose Konfiguration, ist möglich, beispielsweise wenn die Datenschnittstelle 5 analog ausgebildet ist.

Insbesondere können baugleiche Akkupacks 1 durch die Möglichkeit der Konfiguration des wenigstens einen Akkuladeparameters in verschiedene Varianten umkonfiguriert werden. Somit kann z. B. wahlweise eine "Long-Life"-Variante oder eine "Power"-Variante aus einem modularen Akkupack 1 erzeugt werden. Es kann insbesondere vorgesehen sein, dass der Benutzer, d. h. vorzugsweise der Endabnehmer, selbst entscheidet, welche Variante er bevorzugt und die entsprechende Konfiguration mittels des Geräts 6, 7 durchführt. Das Gerät 6, 7 kann das Akkupack 1 ggf. auch automatisch konfigurieren, insbesondere aufgrund der spezifischen elektrischen Anforderungen des Geräts 6, 7 an das Akkupack 1.

Figur 3 zeigt ein beispielhaftes System 14 aus einem akkubetriebenen Gerät 6 und dem konfigurierbaren Akkupack 1. Das akkubetriebene Gerät 6 ist beispielhaft als Elektrowerkzeugmaschine (Akkubohrer) ausgebildet. Grundsätzlich kann aber ein beliebiges akkubetriebenes Gerät 6 vorgesehen sein; besonders gut kann sich die Erfindung allerdings zur Verwendung mit einem Winkelschleifer eignen.

Das akkubetriebene Gerät 6 weist eine Verbrauchersteuereinheit 15, eine Geräteschnittstelle 16 und einen elektrischen Verbraucher 17 auf, die jeweils strichliniert in Figur 3 angedeutet sind.

Die Geräteschnittstelle 16 ist für die elektrische Versorgung des Verbrauchers 17 elektrisch und mechanisch lösbar mit der Akkupackschnittstelle 9 des Akkupacks 1 verbindbar.

Das akkubetriebene Gerät 6 weist ferner eine mit der Datenschnittstelle 5 des Akkupacks 1 elektrisch verbindbare Konfigurationsschnittstelle 18 auf, die eingerichtet ist, um den wenigstens einen Akkuladeparameter nach Vorgabe der Verbrauchersteuereinheit 15 unter Berücksichtigung elektrischer Anforderungen des elektrischen Verbrauchers 17 und/oder unter Berücksichtigung einer Benutzervorgabe zu konfigurieren. Die Benutzervorgabe kann beispielsweise über eine mechanische Benutzerschnittstelle (beispielsweise einen Taster 19), eine kabelbasierte Schnittstelle und/oder eine kabellose Schnittstelle des akkubetriebenen Geräts 6 erfasst werden.

Die Konfigurationsschnittstelle 18 ist korrespondierend der Datenschnittstelle 5 ausgebildet, weist das entsprechende Gegenkontaktelement 13 auf und ist in die Geräteschnittstelle 16 integriert. Auch die Konfigurationsschnittstelle 18 kann grundsätzlich aber beliebig, beispielsweise auch drahtlos, ausgebildet sein.

Der Verbraucher 17 des akkubetriebenen Geräts 6 ist vorzugsweise als Elektromotor ausgebildet.

Die Erfindung eignet sich insbesondere zur Verwendung mit einem akkubetriebenen Gerät 6, bei dem eine elektrische Rekuperationseinrichtung 20 vorgesehen ist, um bei einem Verlangsamen des Verbrauchers 17 bzw. des Elektromotors elektrische Energie in das Akkupack 1 zurückzuspeisen. Auf diese Weise können die spezifischen Anforderungen der Rekuperation bei der Konfiguration der Akkuladeparameter berücksichtigt werden, um eine Überlastung des Akkupacks 1 zu vermeiden. Die Rekuperationseinrichtung 20 kann teilweise oder vollständig in den Verbraucher 17 integriert sein. Die Rekuperationseinrichtung 20 kann auch teilweise oder vollständig in die Verbrauchersteuereinheit 15 integriert sein.

Vorzugsweise kann durch die Konfiguration des Akkuladeparameters durch das akkubetriebene Gerät 6 Einfluss auf einen nachfolgenden Ladeprozess genommen werden, insbesondere um die nutzbare Gesamtkapazität des Akkupacks 1 zu erhöhen oder zu verringern.

In Figur 4 ist ein weiteres beispielhaftes System 14 dargestellt, das ein externes Ladegerät 7 zum Laden eines konfigurierbaren Akkupacks 1 und eines der Akkupacks 1 aufweist.

Das externe Ladegerät 7 weist eine Ladesteuereinheit 21 und eine Geräteschnittstelle 16 auf (jeweils strichliniert in Figur 4 dargestellt). Die Geräteschnittstelle 16 des externen Ladegeräts 7 ist für einen Ladevorgang des Akkupacks 1 elektrisch und mechanisch lösbar mit der Akkupackschnittstelle 9 des Akkupacks 1 verbindbar. Im Ausführungsbeispiel weist das externe Ladegerät 7 zwei Geräteschnittstellen 16 zur Aufnahme eines jeweiligen Akkupacks 1 auf. Grundsätzlich kann das externe Ladegerät 7 allerdings auch ausgebildet sein, um nur ein einziges Akkupack 1 oder um noch mehr Akkupacks 1 aufzunehmen.

Das externe Ladegerät 7 weist ferner eine mit der Datenschnittstelle 5 des Akkupacks 1 elektrisch verbindbare Konfigurationsschnittstelle 18 auf, die eingerichtet ist, um den wenigstens einen an der Datenschnittstelle 5 des Akkupacks 1 bereitgestellten Akkuladeparameter zu erfassen und nach Vorgabe der Ladesteuereinheit 21 unter Berücksichtigung einer Benutzervorgabe zu konfigurieren. Die Benutzervorgabe kann beispielsweise über eine mechanische Benutzerschnittstelle, eine kabelgebundene Schnittstelle oder eine kabellose Schnittstelle des externen Ladegeräts 7 erfasst werden.

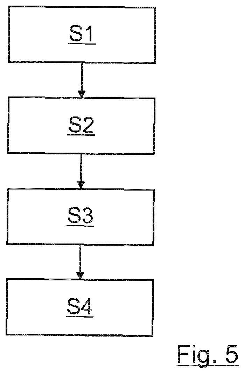

Ein beispielhaftes Verfahren zur Konfiguration eines Akkupacks 1 ist in Figur 5 angedeutet.

In einem ersten Verfahrensschritt S1 kann vorgesehen sein, dass ein bereits vorkonfiguriertes Akkupack 1 mit einem korrespondierenden Gerät 6, 7, beispielsweise dem ackubetriebenen Gerät 6 oder dem externen Ladegerät 7, verbunden wird. Das konfigurierbare Akkupack 1 kann insbesondere Standardeinstellungen betreffend die Akkuladeparameter aufweisen, beispielsweise eine reduzierte nutzbare Gesamtkapazität für einen sicheren Transport, oder eine maximierte Gesamtkapazität.

Im Rahmen eines zweiten Verfahrensschritts S2 kann vorgesehen sein, dass das Gerät 6, 7, beispielsweise das akkubetriebene Gerät 6 oder das externe Ladegerät 7, die Akkuladeparameter zunächst über die Konfigurationsschnittstelle 18 empfängt, beispielsweise wenn das Gerät 6, 7 eingeschaltet wird.

Im Rahmen eines dritten Verfahrensschritt S3 kann vorgesehen sein, dass das Gerät 6, 7, beispielsweise das akkubetriebene Gerät 6 oder das externe Ladegerät 7, den Akkuladeparameter in Abhängigkeit der Anforderungen des elektrischen Verbrauchers 17 des akkubetriebenen Geräts 6 und/oder einer Benutzervorgabe konfiguriert.

Anschließend kann in einem vierten Verfahrensschritt S4 vorgesehen sein, dass das Akkupack 1 von dem externen Ladegerät 7 geladen wird. Das externe Ladegerät 7 empfängt hierzu den wenigstens einen Akkuladeparameter und führt einen Ladevorgang auf Grundlage des Akkuladeparameters durch. Dieser Ladevorgang kann durch die individuelle Konfigurierbarkeit des Akkuladeparameters vorteilhaft beeinflusst werden.

Es kann vorgesehen sein, dass die Akkuladeparameter, die an der Datenschnittstelle 5 zur Verfügung stehen, eine Kennlinie eines Ladeverfahrens eines externen Ladegeräts 7 beeinflussen und/oder das Ladeverfahren festlegen. Das externe Ladegerät 7 kann das Akkupack 1 auf Basis der zur Verfügung gestellten Daten identifizieren und vermag somit vorzugsweise ein für das vermeintlich vorliegende Akkupack 1 ideales Ladeverfahren bzw. eine ideale Ladekennlinie auszuführen.

## Patentansprüche

1. Akkubetriebenes Gerät (6) zur Verwendung mit einem konfigurierbaren Akkupack (1), aufweisend eine Verbrauchersteuereinheit (15), eine Geräteschnittstelle (16) und wenigstens einen elektrischen Verbraucher (17), wobei die Geräteschnittstelle (16) für die elektrische Versorgung des Verbrauchers (17) zur elektrisch und mechanisch lösbaren Verbindung mit einer Akkupackschnittstelle (9) des Akkupacks (1) ausgebildet ist, wobei das akkubetriebene Gerät (6) eine mit einer Datenschnittstelle (5) des Akkupacks (1) elektrisch verbindbare Konfigurationsschnittstelle (18) aufweist, die eingerichtet ist, um wenigstens einen Akkuladeparameter des Akkupacks (1) nach Vorgabe der Verbrauchersteuereinheit (15) unter Berücksichtigung einer Benutzervorgabe und/oder elektrischer Anforderungen des elektrischen Verbrauchers (17) über die Datenschnittstelle (5) des Akkupacks (1) zu konfigurieren, wobei über die Eingabe an der Datenschnittstelle (5) eine nutzbare Gesamtkapazität des Akkupacks (1) konfigurierbar ist, **dadurch gekennzeichnet, dass**
die nutzbare Gesamtkapazität kleiner ist als eine maximal erreichbare, hardwarebasierte Gesamtkapazität des Akkupacks (1), und wobei der elektrische Verbraucher (17) als Elektromotor ausgebildet ist, wobei das akkubetriebene Gerät (6) eine elektrische Rekuperationseinrichtung (20) aufweist, um bei einem Verlangsamen des Elektromotors elektrische Energie in das konfigurierbare Akkupack (1) zurückzuspeisen.

2. Akkubetriebenes Gerät (6) nach Anspruch 1,
**dadurch gekennzeichnet, dass**
das akkubetriebene Gerät (6) als Elektrowerkzeugmaschine ausgebildet ist.

3. Externes Ladegerät (7) zum Laden eines konfigurierbaren Akkupacks (1), aufweisend eine Ladesteuereinheit (21) und eine Geräteschnittstelle (16), wobei die Geräteschnittstelle (16) für einen Ladevorgang des Akkupacks (1) zur elektrisch und mechanisch lösbaren Verbindung mit einer Akkupackschnittstelle (9) des Akkupacks (1) ausgebildet ist,
**gekennzeichnet durch** eine mit einer Datenschnittstelle (5) des Akkupacks (1) elektrisch verbindbare Konfigurationsschnittstelle (18), die eingerichtet ist, um wenigstens einen an der Datenschnittstelle (5) des Akkupacks (1) bereitgestellten Akkuladeparameter zu erfassen und nach Vorgabe der Ladesteuereinheit (21) unter Berücksichtigung einer Benutzervorgabe zu konfigurieren, wobei der wenigstens eine Akkuladeparameter von dem externen Ladegerät (7) unter Berücksichtigung elektrischer Anforderungen einer elektrischen Rekuperationseinrichtung (20) eines akkubetriebenen Geräts (6) konfiguriert wird, um sicherzustellen, dass durch das Zurückspeisen elektrischer Energie in das Akkupack (1) durch die Rekuperationseinrichtung (20) eine Überladung des Akkupacks (1) vermieden wird.

4. Gerät (6, 7) nach einem der Ansprüche 1 bis 3,
**dadurch gekennzeichnet, dass**
die Konfigurationsschnittstelle (18) in die Geräteschnittstelle (16) integriert ist.

5. Gerät (6, 7) nach einem der Ansprüche 1 bis 4,
**dadurch gekennzeichnet, dass**
die Konfigurationsschnittstelle (18) eines oder mehrere Gegenkontaktelemente (13) zur elektrischen und mechanischen Kontaktierung mit einem oder mehreren korrespondierenden Kontaktelementen (12) der Datenschnittstelle (5) des Akkupacks (1) aufweist.

6. System (14), umfassend ein Gerät (6, 7) gemäß einem der Ansprüche 1 bis 5 und das konfigurierbare Akkupack (1).

7. System (14) nach Anspruch 6,
**dadurch gekennzeichnet, dass**
das konfigurierbare Akkupack (1) eine mit der Datenschnittstelle (5) des Akkupacks (1) verbundene Steuereinrichtung (2) aufweist, wobei die Steuereinrichtung (2) und die Datenschnittstelle (5) des Akkupacks (1) eingerichtet sind, um den wenigstens einen Akkuladeparameter an der Datenschnittstelle (5) für das mit dem Akkupack (1) verbundene Gerät (6, 7) zur Verfügung zu stellen, und um den wenigstens einen Akkuladeparameter über eine Eingabe an der Datenschnittstelle (5) zu konfigurieren.

8. System (14) nach Anspruch 6 oder 7,
**dadurch gekennzeichnet, dass**
die Datenschnittstelle (5) in die Akkupackschnittstelle (9) integriert ist.

9. Verfahren zur Konfiguration eines konfigurierbaren Akkupacks (1), wonach wenigstens ein Akkuladeparameter des Akkupacks (1) an einer Datenschnittstelle (5) des Akkupacks (1) für ein mit dem Akkupack (1) verbundenes Gerät (6, 7) zur Verfügung gestellt wird, wobei der wenigstens eine Akkuladeparameter über eine Eingabe an der Datenschnittstelle (5) konfiguriert wird,
**dadurch gekennzeichnet, dass**
der wenigstens eine Akkuladeparameter von dem Gerät (6, 7) unter Berücksichtigung elektrischer Anforderungen einer elektrischen Rekuperationseinrichtung (20) konfiguriert wird, um sicherzustellen, dass durch das Zurückspeisen elektrischer Energie in das Akkupack (1) durch die Rekuperationseinrichtung (20) eine Überladung des Akkupacks (1) vermieden wird.

10. Verfahren nach Anspruch 9,
**dadurch gekennzeichnet, dass**
der wenigstens eine Akkuladeparameter von dem Gerät (6, 7) konfiguriert wird, um ein nachfolgendes Ladeverfahren zu beeinflussen.

## Claims

1. A battery-powered device (6) for use with a configurable battery pack (1), comprising a consumer control unit (15), a device interface (16) and at least one electrical consumer (17), wherein the device interface (16) is designed for the electrical supply of the consumer (17) for an electrically and mechanically releasable connection with a battery pack interface, the battery-powered device (6) having a configuration interface (18) that can be electrically connected to a data interface (5) of the battery pack (1) and is set up to determine at least one battery charging parameter of the battery pack (1) in accordance with a specification of the consumer control unit (15), taking into account a user specification and/or electrical requirements of the electrical consumer (17), via the data interface (5) of the battery pack (1), wherein a usable total capacity of the battery pack (1) can be configured via the input at the data interface (5),
**characterized in that**
the usable total capacity is smaller than a maximum achievable, hardware-based total capacity of the battery pack (1), and the electrical load (17) being in the form of an electric motor, the battery-powered appliance (6) having an electrical recuperation device (20) for feeding electrical energy back into the configurable battery pack (1) when the electric motor slows down.

2. The battery-powered device (6) according to claim 1,
**characterized in that**
the battery-powered device (6) is in the form of an electric power tool.

3. An external charging device (7) for charging a configurable battery pack (1), having a charging control unit (21) and a device interface (16), the device interface (16) being designed for electrically and mechanically releasable connection to a battery pack interface (9) of the battery pack (1) for a charging operation of the battery pack (1),
**characterized by**
a configuration interface (18) that can be electrically connected to a data interface (5) of the battery pack (1) and is set up to detect at least one battery charging parameter provided at the data interface (5) of the battery pack (1) and to configure it according to the specification of the charging control unit (21), taking into account a user specification, wherein the at least one battery charging parameter is configured by the external charging device (7) taking into account electrical requirements of an electrical recuperation device (20) of a battery-operated device (6), in order to ensure that overcharging of the battery pack (1) is avoided by the recovery of electrical energy into the battery pack (1) by the recuperation device (20).

4. The device (6, 7) according to one of claims 1 to 3,
**characterized in that**
the configuration interface (18) is integrated into the device interface (16).

5. The device (6, 7) according to one of claims 1 to 4,
**characterized in that**
the configuration interface (18) has one or more counter-contact elements (13) for making electrical and mechanical contact with one or more corresponding contact elements (12) of the data interface (5) of the battery pack (1).

6. A system (14) comprising a device (6, 7) according to one of claims 1 to 5 and the configurable battery pack (1).

7. The system (14) according to claim 6,
**characterized in that**
the configurable battery pack (1) has a control device (2) connected to the data interface (5) of the battery pack (1), the control device (2) and the data interface (5) of the battery pack (1) being set up to make the at least at least one battery charging parameter at the data interface (5) for the device (6, 7) connected to the battery pack (1), and to configure the at least one battery charging parameter via an input at the data interface (5).

8. The system (14) according to claim 6 or 7,
**characterized in that**
the data interface (5) is integrated into the battery pack interface (9).

9. A method for configuring a configurable battery pack (1), according to which at least one battery charging parameter of the battery pack (1) is made available at a data interface (5) of the battery pack (1) for a device (6, 7) connected to the battery pack (1), the at least one battery charging parameter being configured via an input at the data interface (5),
**characterized in that**
the at least one battery charging parameter is configured by the device (6, 7) taking into account electrical requirements of an electrical recuperation device (20) in order to ensure that overcharging of the battery pack (1) by the recuperation device (20) feeding electrical energy back into the battery pack (1) is avoided.

10. The method according to claim 9,
**characterized in that**
the at least one battery charging parameter is configured by the device (6, 7) in order to influence a subsequent charging process.

## Revendications

1. Appareil alimenté par accumulateur (6), destiné à être utilisé avec un bloc d'accumulateur (1) configurable, présentant une unité de commande de consommateur (15), une interface d'appareil (16) et au moins un consommateur électrique (17), l'interface d'appareil (16) pour l'alimentation électrique du consommateur (17) étant conçue pour la liaison électriquement et mécaniquement amovible avec une interface de bloc d'accumulateur (9) du bloc d'accumulateur (1), l'appareil (6) alimenté par accumulateur présentant une interface de configuration (18) pouvant être reliée électriquement à une interface de données (5) du bloc d'accumulateur (1), qui est agencée pour configurer au moins un paramètre de charge du bloc d'accumulateur (1) selon les indications de l'unité de commande du consommateur (15) en tenant compte d'une indication de l'utilisateur et/ou des exigences électriques du consommateur électrique (17) par l'intermédiaire de l'interface de données (5) du bloc d'accumulateur (1), une capacité totale utilisable du bloc d'accumulateur (1) pouvant être configurée par l'intermédiaire de l'entrée sur l'interface de données (5),
**caractérisé en ce que**
la capacité totale utilisable est inférieure à une capacité totale maximale atteignable, basée sur le matériel, du bloc d'accumulateur (1), et dans lequel le consommateur électrique (17) est conçu comme un moteur électrique, l'appareil alimenté par accumulateur (6) présentant un dispositif de récupération électrique (20) pour réinjecter de l'énergie électrique dans le bloc d'accumulateur configurable (1) en cas de ralentissement du moteur électrique.

2. L'appareil alimenté par accumulateur (6) selon la revendication 1,
**caractérisé en ce que**
l'appareil alimenté par accumulateur (6) est conçu comme une machine-outil électrique.

3. Chargeur externe (7) pour charger un bloc d'accumulateur configurable (1), présentant une unité de commande de charge (21) et une interface d'appareil (16), l'interface d'appareil (16) étant conçue pour une opération de charge du bloc d'accumulateur (1) en vue d'une liaison électrique et mécanique détachable avec une interface de bloc d'accumulateur (9) du bloc d'accumulateur (1),
**caractérisé par**
une interface de configuration (18) pouvant être reliée électriquement à une interface de données (5) du bloc d'accumulateur (1), qui est conçue pour saisir au moins un paramètre de charge du bloc d'accumulateur mis à disposition sur l'interface de données (5) du bloc d'accumulateur (1) et pour le configurer selon les indications de l'unité de commande de charge (21) en tenant compte d'une indication de l'utilisateur, dans lequel le au moins un paramètre de charge du bloc d'accumulateur est configuré par le chargeur externe (7) en tenant compte des exigences électriques d'un dispositif de récupération électrique (20) d'un appareil (6) alimenté par accumulateur, afin de garantir qu'une surcharge du bloc d'accumulateur (1) soit évitée par la réinjection d'énergie électrique dans le bloc d'accumulateur (1) par le dispositif de récupération (20).

4. L'appareil (6, 7) selon l'une des revendications 1 à 3,
**caractérisé en ce que**
l'interface de configuration (18) est intégrée dans l'interface d'appareil (16).

5. L'appareil (6, 7) selon l'une des revendications 1 à 4,
**caractérisé en ce que**
l'interface de configuration (18) présente un ou plusieurs éléments de contact complémentaires (13) pour la mise en contact électrique et mécanique avec un ou plusieurs éléments de contact (12) correspondants de l'interface de données (5) du bloc d'accumulateur (1).

6. Système (14) comprenant un appareil (6, 7) selon l'une des revendications 1 à 5 et le bloc d'accumulateur configurable (1).

7. Le système (14) selon la revendication 6,
**caractérisé en ce que**
le bloc d'accumulateur configurable (1) comporte un dispositif de commande (2) relié à l'interface de données (5) du bloc d'accumulateur (1), le dispositif de commande (2) et l'interface de données (5) du bloc d'accumulateur (1) étant agencés pour mettre à disposition l'au moins un paramètre de charge du bloc d'accumulateur sur l'interface de données (5) pour l'appareil (6, 7) relié au bloc d'accumulateur (1), et pour configurer l'au moins un paramètre de charge du bloc d'accumulateur par une entrée sur l'interface de données (5).

8. Système (14) selon la revendication 6 ou 7,
**caractérisé en ce que**
l'interface de données (5) est intégrée dans l'interface d'accumulateurs (9).

9. Procédé de configuration d'un bloc d'accumulateur configurable (1), selon lequel au moins un paramètre de charge du bloc d'accumulateur (1) est mis à disposition sur une interface de données (5) du bloc d'accumulateur (1) pour un appareil (6, 7) relié au bloc d'accumulateur (1), le au moins un paramètre de charge du bloc d'accumulateur étant configuré par une entrée sur l'interface de données (5),
**caractérisé en ce que**
l'au moins un paramètre de charge du bloc d'accumulateur est configuré par l'appareil (6, 7) en tenant compte des exigences électriques d'un dispositif de récupération électrique (20), afin de garantir qu'une surcharge du bloc d'accumulateur (1) est évitée par la réinjection d'énergie électrique dans le bloc d'accumulateur (1) par le dispositif de récupération (20).

10. Le procédé selon la revendication 9,
**caractérisé en ce que**
le au moins un paramètre de charge du bloc d'accumulateur est configuré par le dispositif (6, 7) pour influencer un procédé de charge ultérieur.
